# EUROPÄISCHE PATENTSCHRIFT

(11) **EP 2 807 060 B1**
(45) Veröffentlichungstag und Bekanntmachung des Hinweises auf die Patenterteilung: **14.09.2016**
(21) Anmeldenummer: 13700871.0
(22) Anmeldetag: 15.01.2013
(51) Int. Cl.: B60T 8/36, F16K 31/06

(54) **ELEKTROMAGNETVENTIL**
ELECTROMAGNETIC VALVE
VALVE ÉLECTROMAGNÉTIQUE

(30) Priorität: 24.01.2012 DE 102012200977
(43) Veröffentlichungstag der Anmeldung: 03.12.2014
(73) Patentinhaber: Continental Teves AG&Co. Ohg, 60488 Frankfurt (DE)
(72) Erfinder: COURTH, Christian, 60439 Frankfurt am Main (DE); VOSS, Christoph, 60435 Frankfurt am Main (DE)
(86) Internationale Anmeldenummer: PCT/EP2013/050620
(87) Internationale Veröffentlichungsnummer: WO 2013/110524

(56) Entgegenhaltungen:
- WO-A1-2005/038322
- WO-A1-2011/128123
- WO-A1-2012/016741
- DE-A1-102004 032 200

## Beschreibung

Die Erfindung betrifft ein Elektromagnetventil nach dem Oberbegriff des Patentanspruchs 1.

Aus der DE 102 52 231 A1 ist bereits ein Elektromagnetventil der gattungsbildenden Art bekannt geworden, mit einem Ventilgehäuse, in dem ein Ventilschließglied beweglich geführt ist, mit einem das Ventilschließglied betätigenden Magnetanker, der in Abhängigkeit von der elektromagnetischen Erregung einer am Ventilgehäuse angebrachte Ventilspule eine Hubbewegung in Richtung eines im Ventilgehäuse angeordneten Magnetkerns vollzieht, sowie mit einer Rückstellfeder, die in der elektromagnetisch nicht erregten Ventilstellung den Magnetanker in einem definierten Axialabstand vom Magnetkern positioniert, wobei der Magnetanker vom Magnetkern durch einen Zwischenraum getrennt ist.

Die DE 10 2004 032 200 A1 offenbart ein Elektromagnetventil, mit einem Magnetanker zur Betätigung eines Ventilschließgliedes in einem Ventilgehäuse, wozu der Magnetanker abhängig von der elektromagnetischen Erregung einer am Ventilgehäuse angebrachten Ventilspule eine Hubbewegung in Richtung eines am Ventilgehäuse angeordneten Magnetkerns vollzieht. An der Mantelfläche des Magnetankers ist eine umlaufende Ringnut und in der Ringnut eine axial bewegliche Drosselscheibe angeordnet, die abhängig vom Magnetankerhub im Bereich der Ringnut zwischen zwei magnetankerfesten Anschlägen eine hydraulische Drosselung vollzieht.

Es ist nunmehr die Aufgabe der Erfindung, eine Anordnung der Drosselscheibe zwischen zwei magnetankerfesten Anschlägen zu vermeiden, um das Schaltgeräusch beim Anlegen des Magnetankers an den Magnetkern zu reduzieren.

Diese Aufgabe wird erfindungsgemäß für ein Elektromagnetventil der angegebenen Art mit den kennzeichnenden Merkmalen des Patentanspruchs 1 gelöst.

Weitere Merkmale und Vorteile der Erfindung gehen aus den Unteransprüchen hervor. Diese werden anhand mehrerer Zeichnungen nachfolgend erläutert.

Es zeigen:
- Fig. 1: eine vergrößerte Darstellung der erfindungswesentlichen Einzelheiten eines Elektromagnetventils in der Ventilgrundstellung, bestehend aus einer zwischen einem Magnetkern und einem Magnetanker eingespannten Rückstellfeder und einer am Umfang des Magnetankers ausgebildeten Ringnut, in die sich zur Herstellung eines definierten, hydraulisch durchströmbaren Ringspalts ein an einem Gehäuseanschlag positionierte Drosselscheibe erstreckt,
- Fig. 2, 3: ausgehend von Figur 1 den hydraulisch in Richtung des Magnetkerns abgebremsten Magnetanker, wozu sich die Drosselscheibe zur Verkleinerung des Ringspalts in Überdeckung mit einer Schrägschulter des Magnetankers befindet, die sich an die Ringnut anschließt,
- Fig. 4, 5: den Magnetanker in einer gegenüber den Fig. 2, 3 entgegengesetzten, drosselfreien Betätigungsrichtung, wozu die Drosselscheibe zur Freigabe eines maximalen Ringspalts von einem auf Höhe der Schrägschulter angeordneten Gehäuseanschlags abgehoben ist,
- Fig. 6: eine Perspektivansicht der in den Figur 1 bis 5 abgebildeten Einzelheiten.

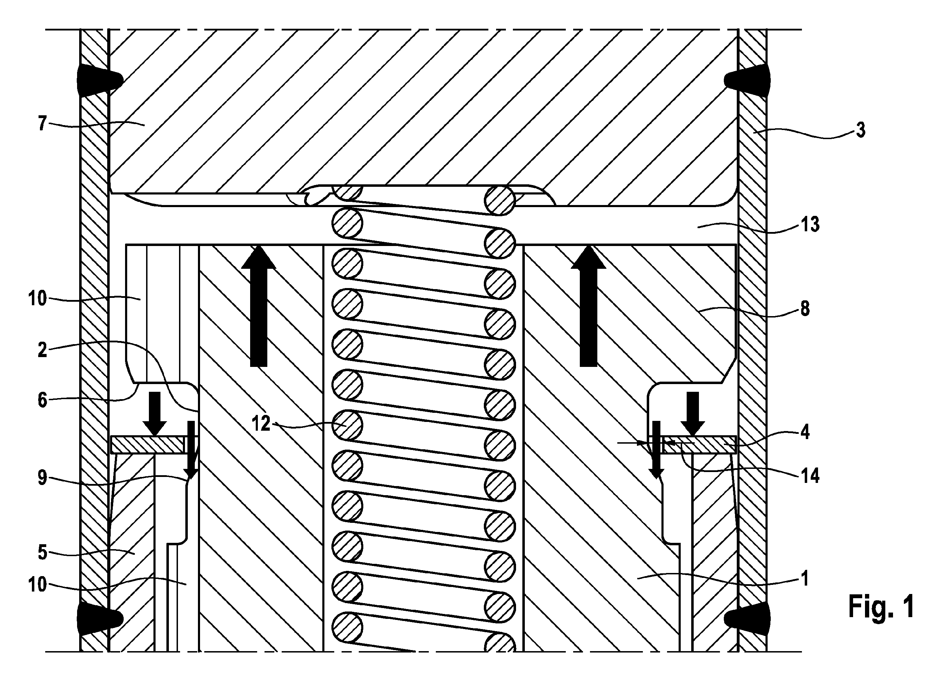

In den Figuren 1 bis 6 ist eine zweckmäßige Anwendung der Erfindung für ein elektromagnetisch nicht erregtes, in Grundstellung geschlossenes Elektromagnetventil gezeigt, dessen Ventilgehäuse 3 beispielhaft in Patronenbauweise ausgeführt ist. Das in den Figuren 1 bis 5 abschnittsweise abgebildete Oberteil des Ventilgehäuses 3 ist als dünnwandige Ventilhülse gestaltet, in welcher ein zylinderförmiger Magnetanker 1 entlang seinem Führungsbund 8 präzise und reibungsminimiert geführt ist. Oberhalb des Magnetankers 1 befindet sich ein stopfenförmiger Magnetkern 7, der das Ventilgehäuse 3 verschließt. Der Magnetanker 1 nimmt innerhalb seiner Stufenbohrung eine Rückstellfeder 12 mit linearem Kennlinienverlauf auf, die sich als Schraubendruckfeder mit ihrem aus dem Magnetanker 1 hervorstehenden Windungsende in Richtung der Stirnfläche des Magnetkerns 7 erstreckt und dort abstützt. Der Magnetanker 1 verschließt folglich unter der Wirkung der Rückstellfeder 12 mit einem in den Zeichnungen nicht dargestellten Ventilschließglied den Durchlass eines im Ventilgehäuse 3 fixierten Ventilsitzkörpers, sodass nach Figur 1 in der elektromagnetisch nicht erregten Ventilgrundstellung die Druckmittelverbindung unterbrochen ist.

Durch eine auf dem Ventilgehäuse 3 angebrachte Ventilspule lässt sich auf an sich bekannte Weise elektromagnetisch erregt der Magnetanker 1 in Richtung auf den Magnetkern 7 bewegen, damit zur Herstellung einer Druckmittelverbindung das Ventilschließglied vom Ventilsitzkörper abgehoben werden kann.

Gemäß der Figur 1 verharrt in der elektromagnetisch nicht erregten Ventilgrundstellung der Magnetanker 1 in einem definierten Axialabstand vom Magnetkern 7, so dass der Magnetanker 1 vom Magnetkern 7 durch einen Zwischenraum getrennt ist, der ebenso wie der gesamte Innenraum des Ventilgehäuses 3 infolge des als Hydraulikventil für schlupfgeregelte Kraftfahrzeugbremsen konzipierten Elektromagnetventils blasenfrei mit Bremsflüssigkeit (Druckmittel) befüllt ist. Als wesentlicher Bestandteil der Erfindung geht aus sämtlichen Abbildung hervor, dass zur Vermeidung eines störenden Magnetankeranschlaggeräuschs an der Mantelfläche des Magnetankers 1 eine umlaufende Ringnut 2 und eine im Ventilgehäuse 3 axial bewegliche Drosselscheibe 4 angeordnet ist, welche ohne signifikante Drosselwirkung auf der Höhe der Ringnut 2 an einem Gehäuseanschlag 5 grundpositioniert ist. Zur Vermeidung eines Magnetankeranschlaggeräuschs bewirkt die Drosselscheibe 4 eine Drosselung des aus dem Zwischenraum 13 zu verdrängenden Druckmittels, wenn sich der Magnetanker 1 kurz vor dem Magnetkern 7 befindet, womit der Magnetanker 1 infolge der hydraulischen Drosselung in Richtung des Magnetkerns 7 abgebremst wird.

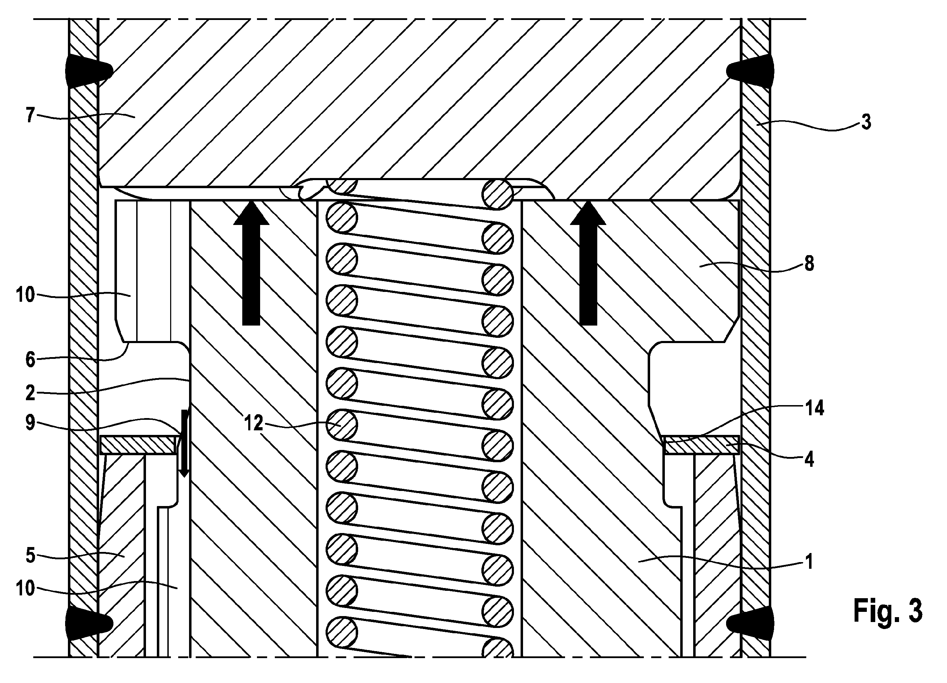

Wie nachfolgend anhand den Figuren 1 bis 3 erläutert wird, erfolgt somit abhängig vom elektromagnetisch initiierten Hub des Magnetankers 1 eine hydraulische Beaufschlagung der Drosselscheibe 4 durch das mittels des Magnetankers 1 aus dem Zwischenraum 13 abbildungsgemäß entlang dem Magnetanker 1 von oben nach unten im Ventilgehäuse 3 verdrängten Druckmittel, wodurch die Drosselscheibe 4 zur Drosselung des verdrängten Druckmittels entlang der Ringnut 2 und der damit zu erzielenden Abbremsung des Magnetankers 1 (siehe Figur 3) am Gehäuseanschlag 5 verharrt.

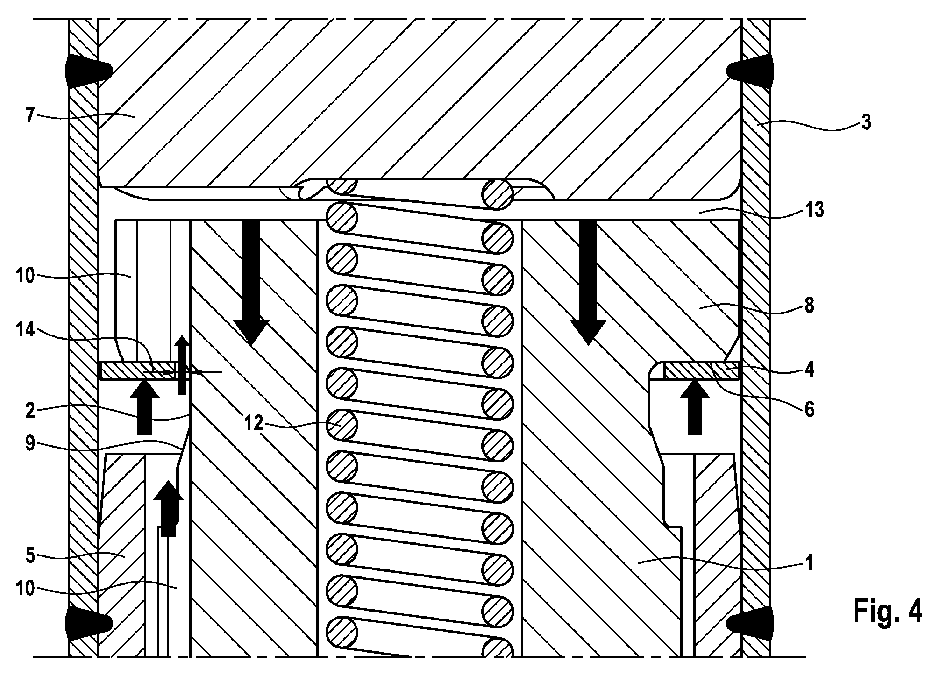

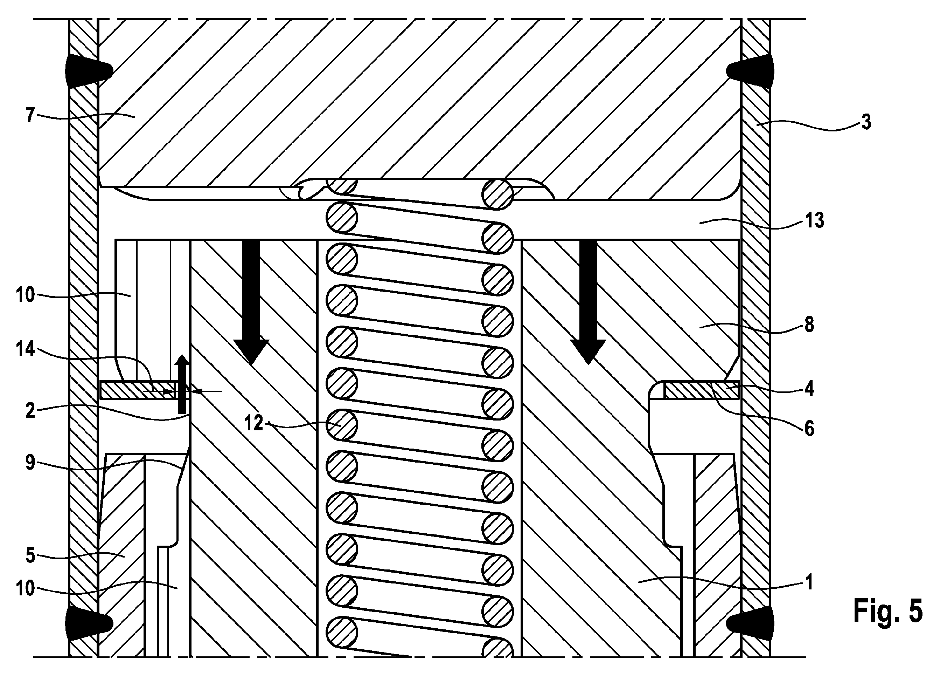

Erst nach Unterbrechung des elektromagnetisch initiierten Ankerhubs erfolgt gemäß den Figuren 4, 5 eine drosselfreie Rückstellung des Magnetankers 1, indem die Drosselscheibe 4 infolge der Strömungsumkehr hydraulisch betätigt vom Gehäuseanschlag 5 in Richtung der am Führungsbund 8 vorgesehenen Anschlagfläche 6 abgehoben wird, sodass der Magnetanker 1 durch die Wirkung der Rückstellfeder 12 verzögerungsfrei in die Grundstellung zurückgestellt wird.

Hierzu ist gemäß den Figuren 1 bis 6 die Drosselscheibe 4 in der Ringnut 2 spielbehaftet aufgenommen, wobei die Drosselscheibe 4 wechselweise mit jeweils einer ihrer beiden Stirnflächen entweder gemäß den Figuren 1 bis 3 an dem im Ventilgehäuse 3 fixierten Gehäuseanschlag 5 oder gemäß den Figuren 4, 5 an der die Ringnut 2 begrenzenden Anschlagfläche 6 des Magnetankers 1 anliegt, die an der Unterseite des Führungsbunds 8 ausgebildet ist.

Wie aus Figur 1 hervor geht, ist zum drosselfreien axialen Durchströmen eines zwischen dem Magnetanker 1 und dem Ventilgehäuse 3 vorgesehenen Ringquerschnitts der Magnetankerquerschnitt im Bereich der Ringnut 2 ein Minimum. Baulich ist die Ringnut 2 in Richtung des Magnetkerns 7 von der am Führungsbund 8 des Magnetankers 1 ausgebildeten Anschlagfläche 6 sowie entgegengesetzt zur Anschlagfläche 6 von einer kegelförmig erweiterten Schrägschulter 9 des Magnetankers 1 begrenzt, womit jeweils durch die Relativstellung der Drosselscheibe 4 innerhalb der Ringnut 2 die Größe des dazwischen liegenden Ringspalts 14 bestimmt wird, um zur Beeinflussung der Magnetankerbewegung entweder im Bereich der Anschlagfläche 6 den ungedrosselten oder durch den Bereich der Schrägschulter 9 einen gedrosselten Strömungszustand zu erzielen.

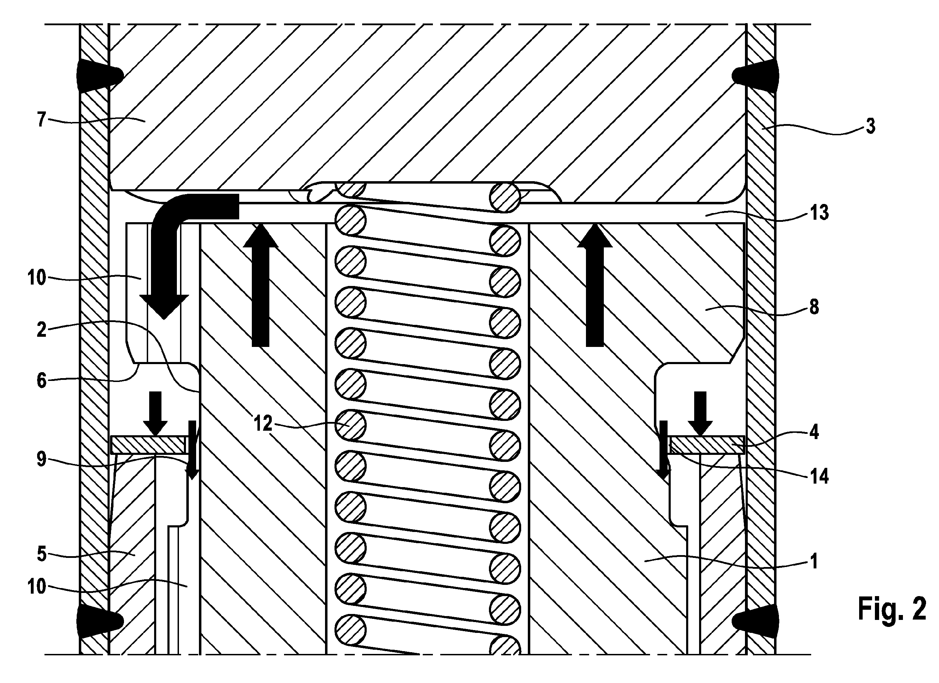

Gemäß der Figur 1 verharrt die Drosselscheibe 4 bei elektromagnetischer Erregung des Magnetankers 1 am Gehäuseanschlag 5, wobei sich die Drosselscheibe 4 zu Beginn der elektromagnetischen Ankerregung auf gleicher Höhe mit der Ringnut 2 befindet, sodass der zur ungehinderten Durchströmung vorgesehene Ringspalt 14 zwischen der Ringnut 2 und der Drosselscheibe 4 unverändert in der Ventilgrundstellung ein Maximum beträgt. Damit erfolgt zunächst zu Beginn der elektromagnetisch initiierten Hubbewegung des Magnetankers 1 über die Höhe der Ringnut 2 eine ungedrosselte, verzögerungsfreie Betätigung des Magnetankers 1 in Richtung des Magnetkerns 7, bis sich die Drosselscheibe 4 während der elektromagnetisch erregten Magnetankerbetätigung entsprechend der Figur 2 auf gleicher Höhe mit der sich kontinuierlich radial erweiternden Schrägschulter 9 befindet, womit zur wirkungsvollen hydraulischen Abbremsung des Magnetankers 1 der zur Durchströmung vorgesehene Ringspalt 14 zwischen der konischen Schrägschulter 9 und der Drosselscheibe 4 mit zunehmendem Ankerhub ein Minimum beträgt. Folglich kann das aus dem Zwischenraum 13 in Richtung der Drosselscheibe 4 zu verdrängende Druckmittel nur gedrosselt durch den minimalen Ringspalt 14 entweichen, bis schließlich gemäß der Figur 3 der Magnetanker 1 geräuschlos am Magnetkern 7 anliegt.

Erst mit der Unterbrechung der elektromagnetischen Erregung des Magnetankers 1 kehren sich die Bewegungsvorgänge um, wonach sich der Magnetanker 1 unter der Wirkung der Rückstellfeder 12 gemäß den Figuren 4 und 5 nach unten bewegt, wodurch das vertikal von unten in Richtung des sich erweiternden Zwischenraums 13 verdrängte Druckmittel die Drosselscheibe 4 gegen die Anschlagfläche 6 bewegt. Hierdurch gelangt die Drosselscheibe 4 wieder in den drosselfreien Bereich der Ringnut 2, die zur ungehinderten Durchströmung den maximalen Ringspalt aufweist.

Zur Minderung des Strömungswiderstands ist die Mantelfläche des Magnetankers 1 mit wenigstens einer Längsnut 10 versehen, die sich vom oberen Führungsbund 8 über die Ringnut 2 und die Schrägschulter 9 zum unteren, dem nicht abgebildeten Ventilschließglied zugewandten Ende des Magnetankers 1 erstreckt, sodass die Vertikaldurchströmung der Längsnut 10 in Abhängigkeit der Größe des jeweils von der Drosselscheibe 4 freigegebenen Ringspalts 14 möglichst umlenkungsfrei auf direkten Weg erfolgt.

Wie aus der bisherigen Beschreibung und den Zeichnungen hervor geht, werden die beiden Stirnflächen an der Drosselscheibe 4 jeweils entgegengesetzt zur Hubrichtung des Magnetankers 1 hydraulisch beaufschlagt, sodass die Beaufschlagung bzw. die Hubbewegung der Drosselscheibe 4 immer entgegengesetzt zur Hubbewegung des Magnetankers 1 erfolgt. Entsprechend verharrt die Drosselscheibe 4 in den Figuren 1-3 infolge der hydraulischen Beaufschlagung der oberen Stirnfläche der Drosselscheibe 4 entgegengesetzt zur Aufwärtsbewegung des Magnetankers 1 in der unteren Position am Gehäuseanschlag 5, da das Druckmittel aus dem Zwischenraum 13 in Richtung des Gehäuseanschlags 5 verdrängt wird, während in den Figuren 4 und 5 nach der Unterbrechung der elektromagnetischen Erregung mit der durch die Rückstellfeder 12 initiierten Abwärtsbewegung des Magnetankers 1 die untere Stirnfläche der Drosselscheibe 4 von dem im Ventilgehäuse 3 nach oben, in Richtung des sich erweiternden Zwischenraums 13 verdrängten Druckmittels beaufschlagt wird. Hierdurch wird die Drosselscheibe 4 vom Gehäuseanschlag 5 abgehoben und gelangt an der Anschlagfläche 6 des Führungsbunds 8, bis der Magnetanker 1 wieder elektromagnetisch erregt in die aus Figur 1 bekannte, entgegengesetzte Richtung bewegt wird.

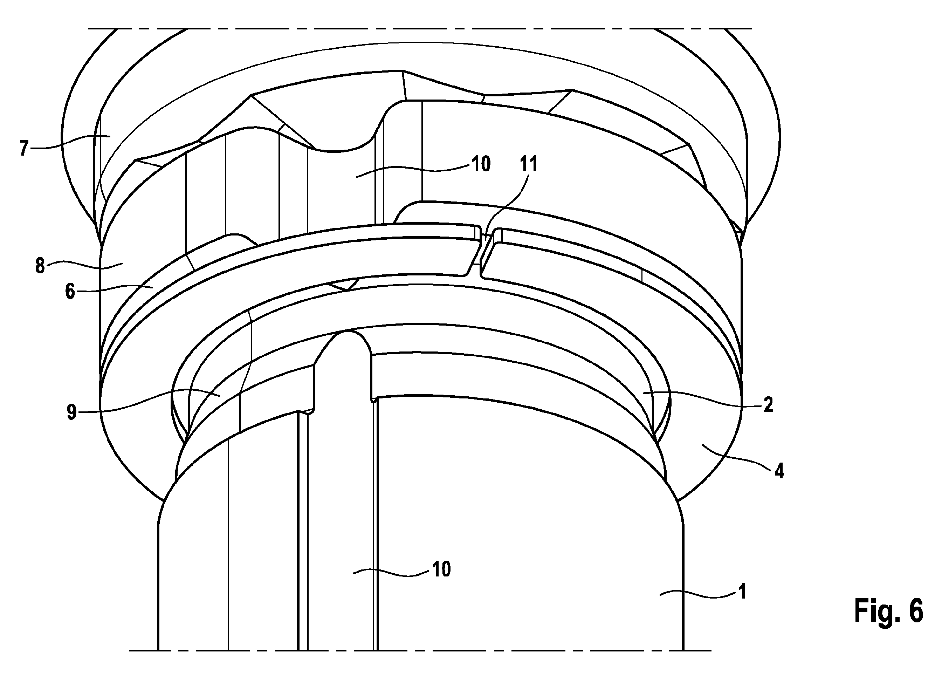

Schließlich zeigt die Figur 6 in einer Perspektivdarstellung die bereits aus den Figuren 1-5 bekannten Bauteile des Elektromagnetventils mit der Besonderheit, dass die als Ringscheibe ausgeführte Drosselscheibe 4 zur Montage in der Ringnut 2 elastisch aufweitbar ist, wozu die Drosselscheibe 4 mittels eines Schlitzes 11 am Umfang unterbrochen ist. Hierdurch kann die Drosselscheibe 4 von unten über den Magnetanker 1 aufgeschoben werden bis diese nach dem Überfahren der Schrägschulter 9 elastisch innerhalb der Ringnut 2 zurückfedert, wodurch bei entsprechenden Federeigenschaften der Schlitz 11 selbsttätig wieder geschlossen wird.

Die Drosselscheibe 4 besteht aus einem nicht magnetisierbaren Werkstoff, beispielsweise aus einem Bandstahl oder aus einem verschleißfesten Kunststoff, sodass eine kostengünstige Herstellung durch Stanzen, Spritzgießen oder Formpressen möglich ist.

Zusammenfassend wird somit ein Elektromagnetventil vorgeschlagen, dass zur Magnetanker-Anschlaggeräuschdämpfung lediglich eine an der Mantelfläche des Magnetankers 1 umlaufende Ringnut 2 und eine im Ventilgehäuse 3 axial bewegliche Drosselscheibe 4 benötigt, welche abhängig vom Hub des Magnetankers 1 im angrenzenden Bereich der Ringnut 2 eine hydraulische Drosselung vollzieht.

### Bezugszeichenliste

- 1: Magnetanker
- 2: Ringnut
- 3: Ventilgehäuse
- 4: Drosselscheibe
- 5: Gehäuseanschlag
- 6: Anschlagfläche
- 7: Magnetkern
- 8: Führungsbund
- 9: Schrägschulter
- 10: Längsnut
- 11: Schlitz
- 12: Rückstellfeder
- 13: Zwischenraum
- 14: Ringspalt

## Patentansprüche

1. Elektromagnetventil, insbesondere für Kraftfahrzeug-Radschlupfregelsysteme, mit einem Ventilgehäuse (3), in dem ein Ventilschließglied beweglich geführt ist, mit einem Magnetanker (1) zur Betätigung des Ventilschließgliedes, der in Abhängigkeit von der elektromagnetischen Erregung einer am Ventilgehäuse (3) angebrachten Ventilspule eine Hubbewegung in Richtung eines Magnetkerns (7) vollzieht, wobei an der Mantelfläche des Magnetankers (1) eine umlaufende Ringnut (2) und in der Ringnut (2) eine axial bewegliche Drosselscheibe (4) angeordnet ist, welche abhängig vom Hub des Magnetankers (1) im angrenzenden Bereich der Ringnut (2) eine hydraulische Drosselung vollzieht, **dadurch gekennzeichnet, dass** der Magnetkern (7) im Ventilgehäuse (3) angeordnet ist, und dass die Drosselscheibe (4) als eine vom Magnetanker (1) durchdrungene Ringscheibe ausgeführt ist, die wechselweise mit jeweils einer ihrer beiden Stirnflächen entweder im Bereich eines im Ventilgehäuse (3) fixierten Gehäuseanschlags (5) oder im Bereich einer die Ringnut (2) begrenzenden Anschlagfläche (6) des Magnetankers (1) anlegbar ist.

2. Elektromagnetventil nach Anspruch 1, **dadurch gekennzeichnet, dass** zur drosselfreien axialen Durchströmung eines zwischen dem Magnetanker (1) und dem Ventilgehäuse (3) vorgesehenen Ringquerschnitts der Magnetankerquerschnitt im Bereich der Ringnut (2) ein Minimum ist, wobei die Ringnut (2) in Richtung des Magnetkerns (7) von der an einem oberen Führungsbund (8) des Magnetankers (1) ausgebildeten Anschlagfläche (6) sowie entgegengesetzt zur Anschlagfläche (6) von einer kegelförmig erweiterten Schrägschulter (9) des Magnetankers (1) begrenzt ist.

3. Elektromagnetventil nach Anspruch 1, **dadurch gekennzeichnet, dass** die Drosselscheibe (4) in der elektromagnetisch nicht erregten Ventilgrundstellung als auch zu Beginn einer elektromagnetischen Betätigung des Magnetankers (1) am Gehäuseanschlag (5) anliegt, wodurch sich die Drosselscheibe (4) auf gleicher Höhe mit der Ringnut (2) befindet, sodass der zur drosselfreien Durchströmung zwischen der Ringnut (2) und der Drosselscheibe (4) vorgesehene Ringspalt (14) ein Maximum ist.

4. Elektromagnetventil nach Anspruch 2, **dadurch gekennzeichnet, dass** sich die Drosselscheibe (4) während der elektromagnetisch erregten Ventilstellung nach Vollzug eines definierten Ankerhubs auf gleicher Höhe mit der Schrägschulter (9) befindet, sodass der zur gedrosselten Durchströmung vorhandene Ringspalt (14) zwischen der Schrägschulter (9) und der Drosselscheibe (4) ein Minimum ist.

5. Elektromagnetventil nach Anspruch 2, **dadurch gekennzeichnet, dass** die Mantelfläche des Magnetankers (1) wenigstens eine Längsnut (10) aufweist, die sich vom oberen Führungsbund (8) über die Ringnut (2) und die Schrägschulter (9) zum unteren, dem Ventilschließglied zugewandten Ende des Magnetankers (1) erstreckt.

6. Elektromagnetventil nach Anspruch 5, **dadurch gekennzeichnet, dass** die gedrosselte sowie ungedrosselte Durchströmung der Längsnut (10) in Abhängigkeit der Relativstellung der Drosselscheibe (4) gegenüber der Ringnut (2) und der Schrägschulter (9) erfolgt.

7. Elektromagnetventil nach Anspruch 1, **dadurch gekennzeichnet, dass** abhängig von der hydraulischen Beaufschlagung der Wirkflächen beider Stirnflächen an der Drosselscheibe (4) die Hubbewegung der Drosselscheibe (4) entgegengesetzt zur Hubrichtung des Magnetankers (1) erfolgt.

8. Elektromagnetventil nach Anspruch 1, **dadurch gekennzeichnet, dass** die als Ringscheibe ausgeführte Drosselscheibe (4) elastisch aufweitbar ist, wozu die Ringscheibe mittels eines Schlitzes (11) am Umfang unterbrochen ist.

9. Elektromagnetventil nach Anspruch 8, **dadurch gekennzeichnet, dass** die Drosselscheibe (4) aus einem nicht magnetisierbaren Werkstoff, vorzugsweise mittels Stanzen, Spritzgießen oder Formpressen, hergestellt ist.

## Claims

1. Electromagnetic valve, in particular for motor vehicle traction control systems, with a valve housing (3) in which a valve closing member is guided moveably, and with a magnet armature (1) for actuating the valve closing member, which magnet armature executes a lifting movement in the direction of a magnet core (7) as a function of the electromagnetic excitation of a valve coil mounted on the valve housing (3), wherein a peripheral annular groove (2) is arranged on the surface area of the magnet armature (1) and there is arranged in the annular groove (2) an axially moveable throttle disk (4) which, as a function of the lift of the magnet armature (1), performs hydraulic throttling in the adjacent region of the annular groove (2), **characterized in that** the magnet core (7) is arranged in the valve housing (3) and **in that** the throttle disk (4) is designed as an annular disk through which the magnet armature (1) penetrates and which can be brought to bear alternately, in each case with one of its two end faces, either in the region of a housing stop (5) fixed in the valve housing (3) or in the region of a stop face (6), delimiting the annular groove (2), of the magnet armature (1).

2. Electromagnetic valve according to Claim 1, **characterized in that** the magnet armature cross section in the region of the annular groove (2) is a minimum for the throttle-free axial throughflow of an annular cross section provided between the magnet armature (1) and the valve housing (3), the annular groove (2) being delimited in the direction of the magnet core (7) by the stop face (6) formed on an upper guide collar (8) of the magnet armature (1) and, opposite the stop face (6), by a conically widened oblique shoulder (9) of the magnet armature (1).

3. Electromagnetic valve according to Claim 1, **characterized in that** the throttle disk (4) bears against the housing stop (5) in the electromagnetically nonexcited basic valve position and at the start of electromagnetic actuation of the magnet armature (1), with the result that the throttle disk (4) is level with the annular groove (2), so that the annular gap (14) provided for throttle-free throughflow between the annular groove (2) and the throttle disk (4) is a maximum.

4. Electromagnetic valve according to Claim 2, **characterized in that**, during the electromagnetically excited valve position, the throttle disk (4) is level with the oblique shoulder (9) after the execution of a defined armature lift, so that the annular gap (14) present for throttling throughflow between the oblique shoulder (9) and the throttle disk (4) is a minimum.

5. Electromagnetic valve according to Claim 2, **characterized in that** the surface area of the magnet armature (1) has at least one longitudinal groove (10) which extends from the upper guide collar (8) via the annular groove (2) and the oblique shoulder (9) to the lower end, facing the valve closing member, of the magnet armature (1).

6. Electromagnetic valve according to Claim 5, **characterized in that** the throttled and the unthrottled throughflow of the longitudinal groove (10) take place as a function of the relative position of the throttle disk (4) with respect to the annular groove (2) and to the oblique shoulder (9).

7. Electromagnetic valve according to Claim 1, **characterized in that**, as a function of the hydraulic action upon the active faces of the two end faces of the throttle disk (4), the lifting movement of the throttle disk (4) takes place opposite to the lifting direction of the magnet armature (1).

8. Electromagnetic valve according to Claim 1, **characterized in that** the throttle disk (4) designed as an annular disk is expandable elastically, for which purpose the annular disk is interrupted at the circumference by means of a slit (11).

9. Electromagnetic valve according to Claim 8, **characterized in that** the throttle disk (4) is produced from a nonmagnetizable material, preferably by means of stamping, injection molding or compression molding.

## Revendications

1. Soupape électromagnétique, en particulier pour des systèmes de régulation du patinage des roues de véhicules automobiles, comprenant un boîtier de soupape (3), dans lequel est guidé de manière déplaçable un organe de fermeture de soupape, comprenant un induit magnétique (1) pour actionner l'organe de fermeture de soupape, qui, en fonction de l'excitation électromagnétique d'une bobine de soupape montée sur le boîtier de soupape (3), effectue un mouvement de course dans la direction d'un noyau magnétique (7), une rainure annulaire périphérique (2) étant disposée au niveau de la surface d'enveloppe de l'induit magnétique (1) et un papillon d'étranglement (4) déplaçable axialement étant disposé dans la rainure annulaire (2), lequel, en fonction de la course de l'induit magnétique (1), effectue un étranglement hydraulique dans la région adjacente de la rainure annulaire (2), **caractérisée en ce que** le noyau magnétique (7) est disposé dans le boîtier de soupape (3) et **en ce que** le papillon d'étranglement (4) est réalisé sous forme de disque annulaire traversé par l'induit magnétique (1), qui peut être appliqué en alternance avec à chaque fois l'une de ses deux faces frontales soit dans la région d'une butée de boîtier (5) fixée dans le boîtier de soupape (3) soit dans la région d'une surface de butée (6) de l'induit magnétique (1) limitant la rainure annulaire (2).

2. Soupape électromagnétique selon la revendication 1, **caractérisée en ce que** pour le passage axial de l'écoulement sans étranglement à travers une section transversale annulaire prévue entre l'induit magnétique (1) et le boîtier de soupape (3) la section transversale de l'induit magnétique dans la région de la rainure annulaire (2) est minimale, la rainure annulaire (2), dans la direction du noyau magnétique (7), étant limitée par la surface de butée (6) réalisée sur un épaulement de guidage supérieur (8) de l'induit magnétique (1) et, à l'opposé de la surface de butée (6), par un épaulement oblique (9) de l'induit magnétique (1) s'élargissant sous forme conique.

3. Soupape électromagnétique selon la revendication 1, **caractérisée en ce que** le papillon d'étranglement (4) s'applique contre la butée de boîtier (5) dans la position de base de la soupape non excitée électromagnétiquement et au début d'un actionnement électromagnétique de l'induit magnétique (1), de sorte que le papillon d'étranglement (4) se trouve à la même hauteur que la rainure annulaire (2), de sorte que la fente annulaire (14) prévue pour le passage de l'écoulement sans étranglement entre la rainure annulaire (2) et le disque d'étranglement (4) soit maximale.

4. Soupape électromagnétique selon la revendication 2, **caractérisée en ce que** le papillon d'étranglement (4), pendant la position de soupape excitée électromagnétiquement après la réalisation d'une course d'induit définie, se trouve à la même hauteur que l'épaulement oblique (9), de sorte que la fente annulaire (14) prévue pour le passage de l'écoulement étranglé entre l'épaulement oblique (9) et le disque d'étranglement (4) soit minimale.

5. Soupape électromagnétique selon la revendication 2, **caractérisée en ce que** la surface d'enveloppe de l'induit magnétique (1) présente au moins une rainure annulaire longitudinale (10) qui s'étend depuis l'épaulement de guidage supérieur (8) par le biais de la rainure annulaire (2) et de l'épaulement oblique (9) jusqu'à l'extrémité inférieure de l'induit magnétique (1) tournée vers l'organe de fermeture de soupape.

6. Soupape électromagnétique selon la revendication 5, **caractérisée en ce que** l'écoulement étranglé et non étranglé à travers la rainure longitudinale (10) s'effectue en fonction de la position relative du papillon d'étranglement (4) par rapport à la rainure annulaire (2) et l'épaulement oblique (9).

7. Soupape électromagnétique selon la revendication 1, **caractérisée en ce qu'**en fonction de la sollicitation hydraulique des surfaces fonctionnelles des deux faces frontales au niveau du disque d'étranglement (4), le mouvement de course du papillon d'étranglement (4) s'effectue à l'opposé de la direction de course de l'induit magnétique (1).

8. Soupape électromagnétique selon la revendication 1, **caractérisée en ce que** le papillon d'étranglement (4) réalisé en tant que disque annulaire peut être élargi élastiquement, ce pour quoi le disque annulaire est interrompu niveau de sa périphérie au moyen d'une fente (11).

9. Soupape électromagnétique selon la revendication 8, **caractérisée en ce que** le papillon d'étranglement (4) est fabriqué en un matériau non magnétisable, de préférence par estampage, moulage par injection ou moulage par compression.
